# EUROPEAN PATENT SPECIFICATION

(11) **EP 2 014 778 B1**
(45) Date of publication and mention of the grant of the patent: **14.08.2013**
(21) Application number: 07110847.6
(22) Date of filing: 22.06.2007
(51) Int. Cl.: C22B 17/00, C01G 11/00, C25D 3/26

(54) **Method of recycling Cd-112 isotope**
Verfahren zum Recycling des Isotops Cd-112
Procédé de recyclage d'isotope Cd-112

(43) Date of publication of application: 14.01.2009
(73) Proprietor: Atomic Energy Council - Institute of Nuclear Energy Research, Lungtan, Taoyuan, Taiwan (TW)
(72) Inventor: Lin, Wuu-Jyh, 325, Longtan Shiang, Taoyuan County (TW); Tang, Song-Un, 330, Taoyuan City, Taoyuan County (TW)
(74) Representative: Beck, Michael Rudolf

(56) References cited:
- EP-A- 1 777 712
- WO-A-03/099916
- US-A- 5 405 588
- SADEGH SAFARZADEH ET AL: "A review on hydrometallurgical extraction and recovery of cadmium from various resources" MINERALS ENGINEERING, PERGAMON PRESS , OXFORD, GB, vol. 20, no. 3, 9 February 2007 (2007-02-09), pages 211-220, XP005880783 ISSN: 0892-6875
- FREITAS ET AL: "Chemical and electrochemical recycling of the negative electrodes from spent Ni-Cd batteries" JOURNAL OF POWER SOURCES, ELSEVIER, AMSTERDAM, NL, vol. 163, no. 2, 22 December 2006 (2006-12-22), pages 1114-1119, XP005812572 ISSN: 0378-7753
- YU P PERELYGIN ET AL: "On the term pH of the precipitation onset of heavy metal hydroxides" RUSSIAN JOURNAL OF APPLIED CHEMISTRY, NAUKA/INTERPERIODICA, MO, vol. 79, no. 3, 1 March 2006 (2006-03-01), pages 492-493, XP019406683 ISSN: 1608-3296

## Description

### Field of the invention

The present invention relates to recycling Cd-112 isotope; more particularly, relates to obtaining a cadmium hydroxide (Cd(OH)₂) precipitation by reacting a hydroxide with a chemical separated solution of a Cd-112 target or a remainder of an electroplating solution having a Cd-112 target and thus recycling Cd-112 isotope through filtrating and rinsing the reacted solution having the Cd(OH)₂ precipitation.

### Description of the Related Art

In-111 isotope has a nuclear characteristic of trapping electron and releasing two γ-radiation characteristic energy spectrum. Because it has a short half life and a proper energy, the In-111 isotope is widely used in a nuclear single photon emission computerized tomography (SPECT) to diagnose human body diseases and aid in bio-researches.

Some labeled compounds of In-111, like ¹¹¹InC13, ¹¹¹In-bleomysin and ¹¹¹In-DTPA octreotide, are used to diagnose a local tumor of an organ. Lipophilic complex compound of ¹¹¹In-oxine can label leukocytes for imaging a gathering and diagnosing nidus of an inflammation. Complex compounds made of ¹¹¹In together with monoclonal antibody, platelet, globulin or recombinant tissue plasminogen activator (γt-PA) and Fab, (Fab')₂ (immunoglobulin fragments) are potential imaging agents newly developed with excellent applications for scanning myocardial infarction and thrombus and for doing bio-researches concerning thrombin and renal functions.

In-111 is generally obtained from ¹¹²Cd(p,2n), ¹¹¹Cd(p,n), ^{nat}Cd(p,xn), ¹¹⁰Cd(d,n) or ¹⁰⁹Ag(α,2n), where the first one has the best production by using a solid ¹¹²Cd target having a high isotope enrichment with a proper target thickness (~100µm) and a proper proton beam energy (~22MeV).

For fabricating ¹¹¹In-DTPA octreotide for nuclear medicine through a cyclotron, Cd-112 isotope is required. However, the Cd-112 isotope is not easy to be obtained and its cost is high. Hence, the prior art does not fulfill all users' requests on actual use.

Different methods of Cd recycling are known from Freitas et al : Journal of power sources, vol. 163, no. 2, p. 1114-1119 or Sadegh Safarzadeh et al : Minerals Engineering, vol. 20, no. 3, p. 211-220

### Summary of the invention

The main purpose of the present invention is to recycle Cd-112 isotope with a low cost, a high recycle rate and a high purity.

To achieve the above purpose, the present invention is a method of recycling Cd-112 isotope, where Cd-112 isotope is recycled through steps of: (a1) adding a sulfide solution into a remainder of an electroplating solution having a Cd-112 target to obtain a precipitation of cadmium sulfide (CdS); (b1) adding hydrochloric acid into the CdS precipitation to obtain a solution of cadmium chloride (CdCl₂); (c1) adding a solution of hydroxide into the CdCl₂ solution to obtain a Cd(OH)₂ precipitation; and (d1) filtrating and rinsing the Cd(OH)₂ precipitation; or, through steps of: (a2) mixing a chemical separated solution of a Cd-112 target and a cadmium bromide (CdBr₂) solution to obtain a mixed solution; (b2) adding a solution of a hydroxide into the mixed solution to obtain a Cd(OH)₂ precipitation; and (c2) filtrating and rinsing the Cd(OH)₂ precipitation. Accordingly, a novel method of recycling Cd-112 isotope is obtained.

### Brief descriptions of the drawings

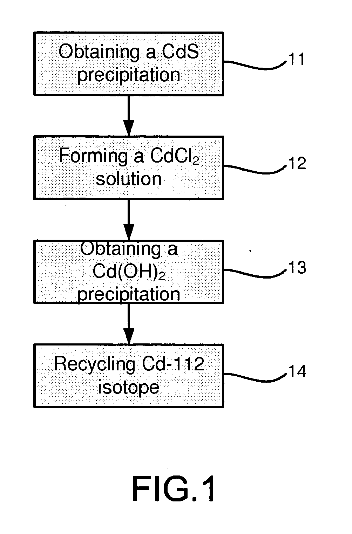

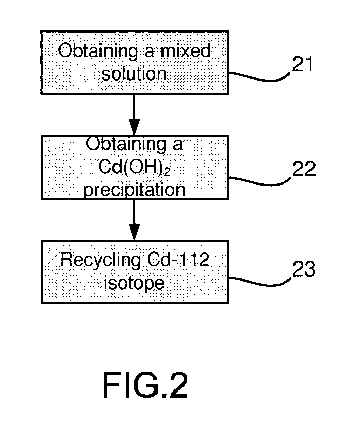

The present invention will be better understood from the following detailed descriptions of the preferred embodiments according to the present invention, taken in conjunction with the accompanying drawings, in which
- FIG.1 and FIG.2: are the views showing the first preferred embodiment and the second preferred embodiment according to the present invention.

### Descriptions of the preferred embodiments

The following descriptions of the preferred embodiments are provided to understand the features and the structures of the present invention.

Please refer to FIG.1, which is a view showing a first preferred embodiment according to the present invention. As shown in the figures, the present invention is a method of recycling Cd-112 isotope, comprising the following steps:
(a1) Obtaining a CdS precipitation 11: A sulfide solution is added to a remainder of an electroplating solution having a Cd-112 target to obtain a precipitation of cadmium sulfide (CdS), where the sulfide solution is a solution of sodium sulfide (Na₂S).
(b1) Forming a CdCl₂ solution 12: Hydrochloric acid is added to the precipitation of CdS to form a solution of cadmium chloride (CdCl₂).
(c1) Obtaining a Cd(OH)₂ precipitation 13: A hydroxide solution is added to the CdCl₂ solution to obtain a precipitation of cadmium hydroxide (Cd(OH)₂), where the hydroxide solution is a solution of sodium hydroxide (Na(OH)) or a solution of potassium hydroxide (K(OH)).
(d1) Recycling Cd-112 isotope 14: The Cd(OH)₂ precipitation is moved into a semi-automatic vacuum filtration system to be filtrated and rinsed for recycling Cd-112 isotope.

Please refer to FIG.2, which is a view showing a second preferred embodiment. As shown in the figures, the present invention is a method of recycling Cd-112 isotope, comprising the following steps:
(a2) Obtaining a mixed solution 21: A chemical separated solution of a Cd-112 target and a cadmium bromide (CdBr₂) solution are mixed to obtain a mixed solution.
(b2) Obtaining a Cd(OH)₂ precipitation 13: A hydroxide solution is added to the mixed solution to obtain a precipitation of Cd(OH)₂, where the hydroxide solution is a solution of Na(OH) or a solution of K(OH).
(c2) Recycling Cd-112 isotope 14: The Cd(OH)₂ precipitation is moved into a semi-automatic vacuum filtration system to be filtrated and rinsed for recycling Cd-112 isotope.

The Cd-112 isotope recycled by the above two embodiments can be calcined to obtain a solid cadmium oxide (CdO); or can be added with a solution of cyanide and an alkaline solution to obtain an electroplating solution having a Cd-112 target, where the Cd-112 isotope can be easily stored. The recycle rate of Cd-112 isotope through using the present invention is more than 98% with a purity rate more than 99%.

To sum up, the present invention is a method of recycling Cd-112 isotope, where Cd-112 isotope is recycled with a recycle rate more than 98% and a purity rate more than 99%; and, thus, a cost for purchasing Cd-112 is reduced and further a cost for a nuclear medicine is lowered as well.

The preferred embodiments herein disclosed are not intended to unnecessarily limit the scope of the invention. Therefore, simple modifications or variations belonging to the equivalent of the scope of the claims and the instructions disclosed herein for a patent are all within the scope of the present invention.

## Claims

1. A method of recycling Cd-112 isotope, comprising the steps of:
(a1) adding a sulfide solution into a remainder of an electroplating solution having a Cd-112 target to obtain a precipitation of cadmium sulfide (CdS);
(b1) adding hydrochloric acid into said precipitation of CdS to obtain a solution of cadmium chloride (CdCl₂);
(c1) adding a solution of hydroxide into said solution of CdCl₂ to obtain a precipitation of cadmium hydroxide (Cd(OH)₂); and
(d1) filtrating and rinsing said precipitation of Cd(OH)₂ to recycle Cd-112.

2. The method according to claim 1, wherein said sulfide solution is a solution of sodium sulfide (Na₂S).

3. The method according to claim 1 or 2, wherein said solution of hydroxide is selected from a group consisting of a solution of sodium hydroxide (Na(OH)) and a solution of potassium hydroxide (K(OH)).

4. The method according to one of claims 1 to 3, wherein said recycled Cd-112 is calcined to obtain solid cadmium oxide (CdO).

5. The method according to one of claims 1 to 4, wherein said recycled Cd-112 is added with a solution of cyanide and an alkaline solution to obtain an electroplating solution having a Cd-112 target.

6. A method of recycling Cd-112 isotope, comprising steps of:
(a1) mixing a chemical separated solution of a Cd-112 target and a cadmium bromide (CdBr₂) solution to obtain a mixed solution;
(b2) adding a solution of a hydroxide into said mixed solution to obtain a precipitation of Cd(OH)₂; and
(c2) filtrating and rinsing said precipitation of Cd(OH)₂ to recycle Cd-112.

7. The method according to claim 6, wherein said solution of hydroxide is selected from a group consisting of a solution of Na(OH) and a solution of K(OH).

8. The method according to claim 6 or 7, wherein said recycled Cd-112 is calcined to obtain solid CdO.

9. The method according to one of claims 6 to 8,wherein said recycled Cd-112 is added with a solution of cyanide and an alkaline solution to obtain an electroplating solution having a Cd-112 target

## Patentansprüche

1. Verfahren zum Recyceln des Isotops Cd-112, das folgende Schritte umfasst:
(a1) Hinzufügen einer Sulfidlösung zu einem Rest einer Galvanisierungslösung mit einem Cd-112-Target, um eine Fällung von Cadmiumsulfid (CdS) zu erhalten;
(b1) Hinzufügen von Chlorwasserstoffsäure zu der Fällung von CdS, um eine Lösung von Cadmiumchlorid (CdCl₂) zu erhalten;
(c1) Hinzufügen einer Lösung von Hydroxid zu der Lösung von CdCl₂, um eine Fällung von Cadmiumhydroxid (Cd(OH)₂) zu erhalten; und
(d1) Filtern und Spülen der Fällung von Cd(OH)₂ zum Recyceln von Cd-112.

2. Verfahren nach Anspruch 1, wobei die Sulfidlösung eine Lösung von Natriumsulfid (Na₂S) ist.

3. Verfahren nach Anspruch 1 oder 2, wobei die Lösung von Hydroxid aus einer Gruppe gewählt wird, die aus einer Lösung von Natriumhydroxid (Na(OH)) und einer Lösung von Kaliumhydroxid (K(OH)) besteht.

4. Verfahren nach einem der Ansprüche 1 bis 3, wobei das recycelte Cd-112 kalziniert wird, um festes Cadmiumoxid (CdO) zu erhalten.

5. Verfahren nach einem der Ansprüche 1 bis 4, wobei das recycelte Cd-112 zu einer Lösung von Zyanid und einer Base hinzugefügt wird, um eine Galvanisierungslösung mit einem Cd-112-Target zu erhalten.

6. Verfahren zum Recyceln des Isotops Cd-112, das folgende Schritte umfasst:
(a1) Mischen einer chemisch getrennten Lösung von einem Cd-112-Target und einer Cadmiumbromidlösung (CdBr₂), um eine gemischte Lösung zu erhalten;
(b2) Hinzufügen einer Lösung von Hydroxid zu der gemischten Lösung von, um eine Fällung von Cd(OH)₂ zu erhalten; und
(c2) Filtern und Spülen der Fällung von Cd(OH)₂ zum Recyceln von Cd-112.

7. Verfahren nach Anspruch 6, wobei die Lösung von Hydroxid aus einer Gruppe gewählt wird, die aus einer Lösung von (Na(OH)) und einer Lösung von (K(OH)) besteht.

8. Verfahren nach Anspruch 6 oder 7, wobei das recycelte Cd-112 kalziniert wird, um festes CdO zu erhalten.

9. Verfahren nach einem der Ansprüche 6 bis 8, wobei das recycelte Cd-112 zu einer Lösung von Zyanid und einer Base hinzugefügt wird, um eine Galvanisierungslösung mit einem Cd-112-Target zu erhalten.

## Revendications

1. Procédé de recyclage d'isotope de 112 Cd comprenant les étapes :
(a1) d'addition d'une solution de sulfure dans un reste de solution d'électroplastie ayant une cible de 112 Cd pour obtenir une précipitation de sulfure de cadmium (CdS) ;
(b1) d'addition d'acide chlorhydrique dans ladite précipitation de CdS pour obtenir une solution de chlorure de cadmium (CdCl₂) ;
(c1) d'addition d'une solution d'hydroxyde dans ladite solution de CdCl₂ pour obtenir une précipitation d'hydroxyde de cadmium (Cd(OH)₂) et
(d1) de filtration et rinçage de ladite précipitation de (Cd(OH)₂ pour recycler du 112 Cd.

2. Procédé selon la revendication 1, ladite solution de sulfure étant une solution de sulfure de sodium (Na₂S).

3. Procédé selon la revendication 1 ou 2, ladite solution d'hydroxyde étant sélectionnée dans un groupe comportant une solution d'hydroxyde de sodium (Na(OH)) et une solution d'hydroxyde de potassium (K(OH)).

4. Procédé selon l'une des revendications 1 à 3, ledit 112 Cd recyclé étant calciné pour obtenir de l'oxyde de cadmium solide (CdO).

5. Procédé selon l'une des revendications 1 à 4, une solution de cyanure et une solution alcaline étant ajoutées au 112 Cd recyclé pour obtenir une solution d'électroplastie ayant une cible 112 Cd.

6. Procédé de recyclage d'isotope 112 Cd comprenant les étapes :
(a1) de mélange d'une solution séparée chimique d'une cible 112 Cd et une solution de bromure de cadmium (CdBr₂) pour obtenir une solution mélangée ;
(b2) d'addition d'une solution d'un hydroxyde dans la solution mélangée pour obtenir une précipitation de (Cd(OH)₂ et
(c2) de filtration et rinçage de la précipitation de (Cd(OH)₂ pour recycler le 112 Cd.

7. Procédé selon la revendication 6, la solution d'hydroxyde étant sélectionnée dans un groupe comprenant une solution de Na(OH) et une solution de K(OH).

8. Procédé selon la revendication 6 ou 7, le 112 Cd recyclé étant calciné pour obtenir du CdO solide.

9. Procédé selon l'une des revendications 6 à 8, une solution de cyanure et une solution alcaline étant ajoutées au 112 Cd recyclé pour obtenir une solution d'électroplastie ayant une cible 112 Cd.
